# EUROPEAN PATENT APPLICATION

(11) **EP 1 808 114 A2**
(43) Date of publication of application: **18.07.2007**
(21) Application number: 06291532.7
(22) Date of filing: 29.09.2006
(51) Int. Cl.: A47L 9/02

(54) **Suction nozzle for vacuum cleaner**

(30) Priority: 11.01.2006 KR 20060003077
(71) Applicant: Samsung Gwangju Electronics Co., Ltd., Gwangju-city (KR)
(72) Inventor: Oh, Jang-keun, c/o 201-708, Haetae Apartment, Gwangju-city (KR); Han, Jung-gyun, c/o 501-1604, Hoban 5th Verdium, Gwangju-city (KR); Lim, Soon-tack, 102-1106, Siyoung Apartment, Kimhae-si, Kyungsangnam-do (KR)
(74) Representative: Blot, Philippe Robert Emile

(57) **Abstract**

The present invention relates to a suction brush for a vacuum cleaner. The suction brush includes a cleaning member for cleaning a cleaning surface, a suction port and a dust guiding groove for guiding contaminants-laden air to the suction port to be formed at a bottom surface of the suction brush, and a turbine fan driven by suction force of a suction motor for rotating the cleaning member. The suction brush comprises a catching part disposed apart from the suction port in a place corresponding to the suction port inside the dust guiding groove for reducing a space around the suction port, wherein the catching part prevents rigid, thin, and long foreign bodies from entering the suction pathway.

## Description

### BACKGROUND OF THE INVENTION

### 1. Field of the Invention

The present invention relates to a suction brush for a vacuum cleaner. More particularly, the present invention relates to a suction brush for a vacuum cleaner with cloths.

### 2. Description of the Related Art

Generally, a vacuum cleaner is an apparatus for sucking dust or contaminants on a cleaning surface using suction force generated by a suction motor when a suction brush is moved on the cleaning surface.

The vacuum cleaner can remove dust or/and contaminants scattered on a cleaning surface, but cannot effectively remove foreign bodies adhered on a cleaning surface and/or stains on a cleaning surface. At this time, after removing dust on a floor of a room using the vacuum cleaner, users should scrub the floor using a cloth in order to remove adhered foreign bodies or stains remaining on the cleaning surface. Thus, many users feel that it is inconvenient to clean with the conventional vacuum cleaner.

To solve the above problem, there was provided a suction brush for a vacuum cleaner having a cloth rotating structure inside the suction brush to remove dust and wipe away simultaneously, as disclosed in Korean Patent No. 449415.

The cloth rotating structure includes a turbine fan rotated by sucked outside air, a power transmitting unit for transmitting a rotation power of the turbine fan to opposite sides of an under part of the suction brush with a plurality of driving shafts and spur gears, and a pair of cloth supporting parts to receive the rotation power of the turbine fan via the power transmitting unit so as to rotate the cloths.

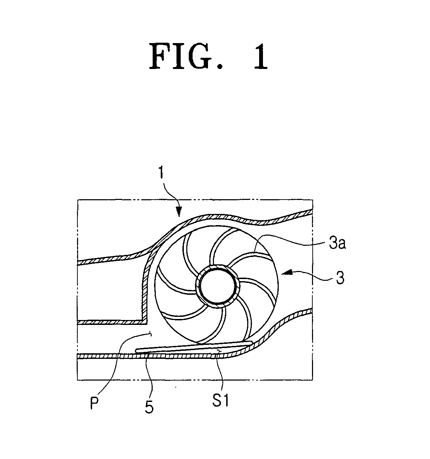

However, in the conventional suction brush, to rotate the cloths by the rotation power of the turbine fan, a suction pathway P through which sucked dust passes suddenly narrows due to the turbine fan 3 disposed in the suction pathway P of the suction brush 1 as shown in Fig. 1. When a thin, long foreign body 5 with relatively rigidity such as toothpicks, cotton swabs, cigarette butts, and so on is sucked in the suction pathway P, the narrow suction pathway P blocks the foreign body 5 from passing through a narrow space S1 between an outer circumferential surface of the turbine fan 3 and an inner circumferential surface of the suction brush 1 so that the foreign body 5 is caught in the narrow space S1. As a result, the turbine fan 3 cannot rotate due to the caught foreign body 5 so that the cloths (not shown) stops rotating. Therefore, users cannot wipe the cleaning floor away.

Furthermore, when the rigidity of the foreign body 5 caught in the narrow space S1 is not less than the rigidity of wings 3a of the turbine fan 3, the wings 3a are damaged. These problems are basically caused because there is no special structure around the suction port for preventing thin, long foreign bodies from entering the suction pathway.

On the other hand, because the conventional turbine fan is rotated by the indirect driving method using suction force by the suction motor, to increase the rotation speed and rotation torque of the cloth is limited compared to the direct driving method that a motor is directly connected to the cloth supporting part to rotate the cloth. Therefore, when a cleaning surface is a little rough, the conventional suction brush cannot smoothly rotate the cloth so that a cleaning work is not effectively performed.

### SUMMARY OF THE INVENTION

The present invention has been developed in order to overcome the above drawbacks and other problems associated with the conventional arrangement. An aspect of the present invention is to provide a suction brush for a vacuum cleaner, which can prevent thin, long foreign bodies with relatively rigidity from entering a suction pathway.

Another aspect of the present invention is to provide a suction brush for a vacuum cleaner, capable of increasing the rotation speed of a turbine fan.

The above aspect and/or other feature of the present invention can substantially be achieved by providing a suction brush for a vacuum cleaner, which includes a cleaning member for cleaning a cleaning surface, a suction port and a dust guiding groove for guiding contaminants-laden air to the suction port to be formed at a bottom surface of the suction brush, and a turbine fan driven by suction force of a suction motor for rotating the cleaning member. The suction brush comprises a catching part disposed apart from the suction port in a place corresponding to the suction port inside the dust guiding groove for reducing a space around the suction port, wherein the catching part prevents rigid, thin, and long foreign bodies from entering the suction pathway.

The catching part is wider than the width of the suction port, and a bottom end of the catching part is formed at a lower level than a bottom end of the suction port.

Both sides of the catching part are inclined in a direction of the suction port. A bottom surface of the catching part is inclined in a direction of the suction port.

The turbine fan comprises a pair of supporting discs; and a plurality of wings disposed between the pair of supporting discs, one end of each of the wings is fixed to anyone of the pair of supporting discs, the other end of each of the wings alternating with to overlap each other.

The suction brush further comprises a partition wall formed along the length of the suction pathway inside the suction pathway in order to divide the suction pathway into a plurality of pathways.

According to another aspect of the present invention, a suction brush for a vacuum cleaner comprises: a body having a suction port, a dust guiding groove guiding contaminants-laden air to the suction port, and a suction pathway guiding the contaminants-laden air entering through the suction port to a dust collecting apparatus; a turbine fan rotatably disposed at the suction pathway of the body; a cover covering an upper side of the body so as to the form the suction pathway; a partition wall formed along the length of the suction pathway inside the suction pathway in order to divide the suction pathway into a plurality of pathways; a pair of cloth supporting plates rotatably disposed on a bottom surface of the body for detachably mounting a cloth on a bottom surface of each of the cloth supporting plates; a power transmitting unit disposed in the body, the power transmitting unit transmitting the rotation power of the turbine fan to the pair of cloth supporting plates for rotating the pair of cloth supporting plates; and a catching part projected inside the dust guiding groove to face the suction port a predetermined distance apart, the catching part having a front surface facing the suction port, the area of which is larger than the area of the suction port, for reducing a space around the suction port.

The turbine fan has a plurality of wings disposed between a pair of supporting discs, one end of each of the plurality of wings alternating to overlap each other.

A distance between the suction port and the front surface of the catching part facing the suction port is approximately 12.5mm to 14.5mm.

With the suction brush for the vacuum cleaner according to an embodiment of the present invention, because rigid, thin, and long foreign bodies are prevented from entering the suction pathway through the suction port, the suction brush may prevent the entered foreign body from stopping the rotation of the turbine fan or from damaging the wings of the turbine fan.

Also, the area of the plurality of wings of the turbine fan is increased for receiving more power of air sucking through the suction pathway so that the rotation speed and the rotation torque of the turbine fan are increased. Therefore, the rotation speed of the cloth is increased so that the cleaning efficiency with respect to a cleaning surface is increased.

With the suction brush according to an embodiment of the present invention, the width of the suction pathway becomes narrower than the width of the conventional suction pathway due to the partition wall so that rigid, thin, and long foreign bodies entering the suction pathway becomes roughly parallel to the suction pathway.

Other objects, advantages and salient features of the invention will become apparent from the following detailed description, which, taken in conjunction with the annexed drawings, discloses preferred embodiments of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:

Fig. 1 is a partially sectional view illustrating a long foreign body caught in a conventional suction brush for a vacuum cleaner;

Fig. 2 is an exploded perspective view illustrating a suction brush for a vacuum cleaner according to an embodiment of the present invention;

Fig. 3 is a partially cutaway perspective view illustrating a suction brush for a vacuum cleaner according to an embodiment of the present invention;

Fig. 4 is a perspective view illustrating a turbine fan of Fig. 2;

Fig. 5 is a partial perspective view illustrating an under side of a suction port of the suction brush of Fig. 2;

Fig. 6 is a partial bottom view illustrating the suction port of the suction brush of Fig. 5;

Fig. 7 is a sectional side view illustrating the suction brush shown in a direction of arrow A in Fig. 3; and

Figs. 8a and 8b are a partial bottom view and a sectional side view illustrating a foreign body caught in the suction port by a catching part.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the present invention will be described in detail with reference to the accompanying drawings.

The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of exemplary embodiments of the present invention.

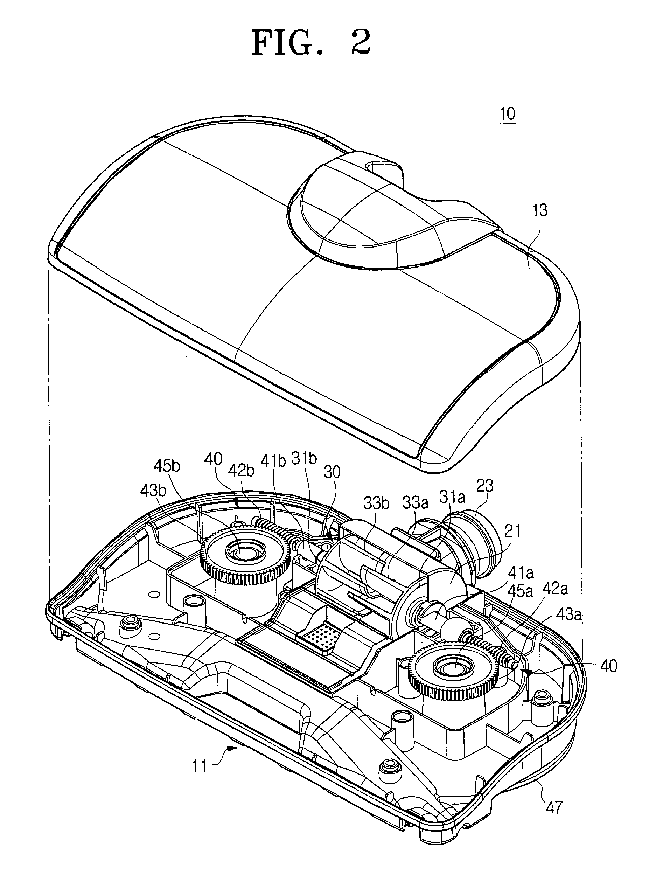

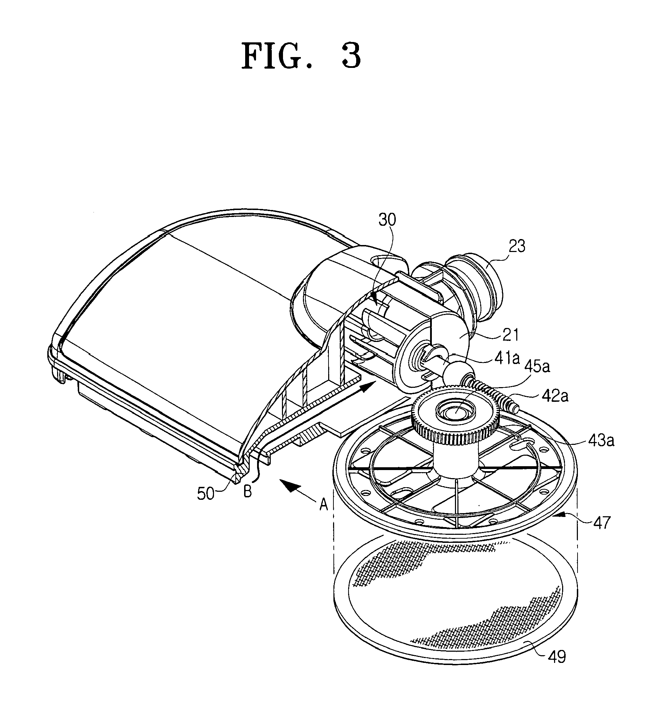

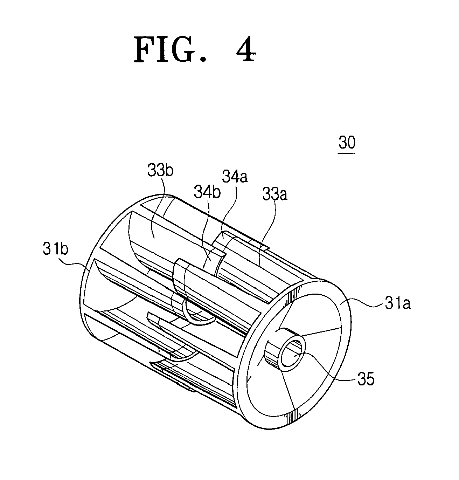

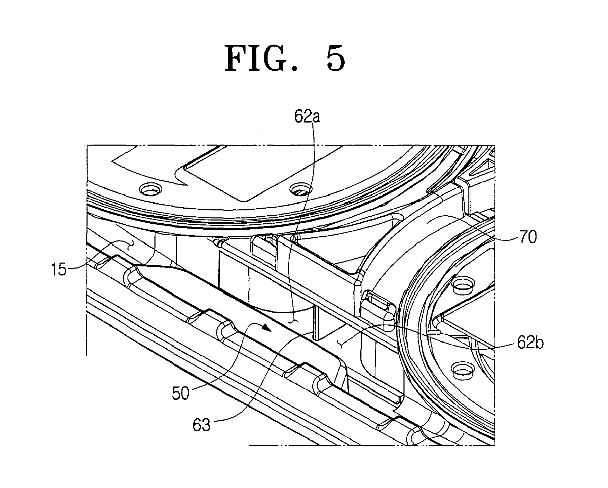

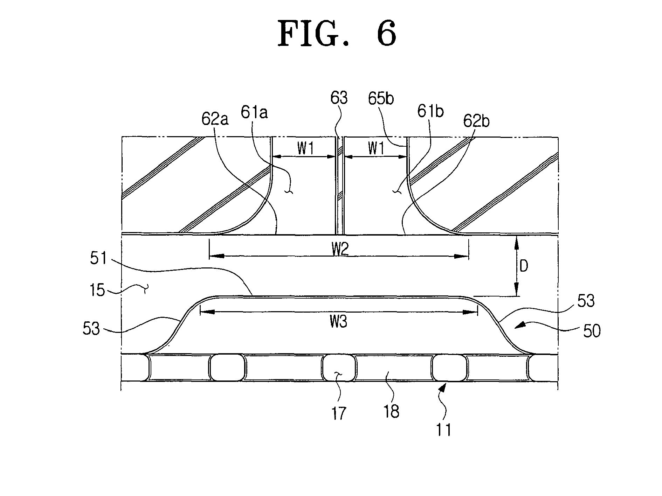

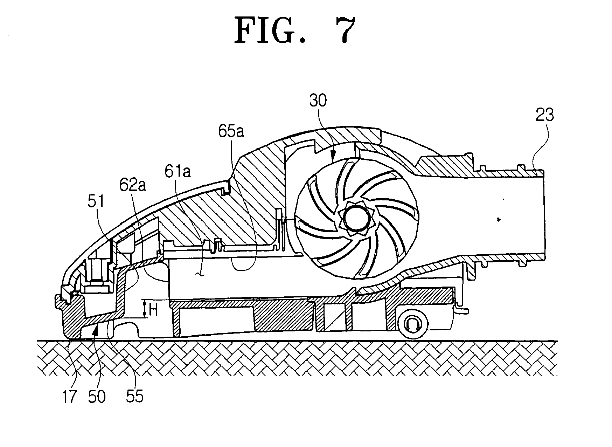

Fig. 2 is an exploded perspective view illustrating a suction brush for a vacuum cleaner according to an embodiment of the present invention, Fig. 3 is a partially cutaway perspective view illustrating a suction brush for a vacuum cleaner according to an embodiment of the present invention, Fig. 4 is a perspective view illustrating a turbine fan of Fig. 2, Fig. 5 is a partial perspective view illustrating an under side of a suction port of the suction brush of Fig. 2, Fig. 6 is a partial bottom view illustrating the suction port of the suction brush of Fig. 5, and Fig. 7 is a sectional side view illustrating the suction brush shown in a direction of arrow A in Fig. 3.

A suction brush according to an embodiment of the present invention is in fluid communication with a cleaner body having a suction motor and a dust collecting apparatus. For this end, the suction brush is connected with the cleaner body directly or via a flexible hose. The suction motor, dust collecting apparatus, cleaner body, and flexible hose may have any of various shapes and structures as well known, so that they will not be shown here.

Furthermore, the suction brush may employ a rotating brush with bristles fixed on an outer circumferential surface thereof or rotating cloths as a cleaning member for wiping a cleaning surface. In the below description, the suction brush according to an embodiment of the present invention has at least one cloth as the cleaning member.

Referring to Fig. 2, the suction brush 10 includes a body 11, a cover 13 covering an upper side of the body 11, a turbine fan 30 causing a cloth 49 (see Fig. 3) to rotate, and a power transmitting unit 40.

The body 11 has at a bottom surface thereof a suction port 62a and 62b (see Fig. 5) and a dust guiding groove 15 for guiding dust and/or contaminants on a cleaning surface with air (hereinafter, referred to as contaminants-laden air) to the suction port 62a and 62b. The body 11 further comprises a suction pathway 61a and 61b (see Fig. 6) for guiding dust and air entering the suction port 62a and 62b to a dust collecting apparatus (not shown).

A connecting pipe 23 being in fluid communication with the flexible hose (not shown) and a necking part 21 wrapping around a part of the turbine fan 30 are disposed at a backside of the body 11.

The turbine fan 30 is disposed at the suction pathway 61 a and 61b, and has a pair of supporting discs 31 a and 31b and a plurality of wings 33a and 33b disposed between the pair of supporting discs 31 a and 31b as shown in Figs. 3 and 4. One end of each of the plurality of wings 33a and 33b is fixed to anyone of the pair of supporting discs 31 a and 31 b, and the other end 34a and 34b thereof is free. At this time, the plurality of wings 33a and 33b is arranged such that the wings 33a fixed to one supporting disc 31a are placed between the wings 33b fixed to the other supporting disc 31 b as shown in Fig. 4. In other words, free ends 34a of the wings 33a fixed to one supporting disc 31a alternate with of free ends 34b the wings 33b fixed to the other supporting disc 31 b. However, free ends 34a of the wings 33a fixed to one supporting disc 31 a are not extended to touch the other supporting disc 31 b.

Because the free ends 34a and 34b of the plurality of wings 33a and 33b is formed to overlap each other, the total area of the plurality of wings 33a and 33b is increased as much as the overlapping area of the plurality of wings 33a and 33b compared with the conventional turbine fan. Therefore, the plurality of wings 33a and 33b receives more force as much as the increased overlapping area of the plurality of wings 33a and 33b by air that is sucked in the suction pathway 61a and 61b along a direction of arrow B of Fig. 3 indicated from the outside of the suction brush 10 to the inside thereof so that the rotation speed of the turbine fan 30 is increased. The increase of the rotation speed of the turbine fan 30 causes the rotation speed of the cloth 49 to increase so that the cleaning efficiency with respect to a cleaning surface is increased. Also, the increase of the power of the air applied on the turbine fan 30 increases the rotation torque of the turbine fan 30 so that more power is transmitted to the power transmitting unit 40.

Referring to Fig. 2, the power transmitting unit 40 includes a pair of driving shafts 41 a and 41 b rotating with the turbine fan 30, a pair of worm wheels 43a and 43b engaging with a worm 42a and 42b of each of the pair of driving shafts 41 a and 41 b, and a pair of vertical shafts 45a and 45b disposed at a center of each of the pair of worm wheels 43a and 43b for changing over the power transmitting direction of the turbine fan 30 from a horizontal direction to a vertical direction.

An end of each of the pair of driving shafts 41a and 41b is fixed to a fixing hole 35 (see Fig. 4) of the turbine fan 30.

The pair of worm wheels 43a and 43b is respectively disposed at ends of the pair of vertical shafts 45a and 45b and a pair of cloth supporting parts 47 is respectively disposed at the other ends of the pair of vertical shafts 45a and 45b, as shown in Figs. 2 and 3. Therefore, the rotation power of the turbine fan 30 is transmitted to each of the pair of cloth supporting parts 47 via the pair of driving shafts 41a and 41b and worm wheels 43a and 43b thereby rotating the pair of cloth supporting parts 47 in a direction.

The cloth supporting part 47 and the cloth 49 are configured as a pair. However, the pair of cloth supporting parts 47 and cloths 49 has the same structure so that only one cloth supporting part 47 and one cloth 49 is shown in Fig. 3 for clarity.

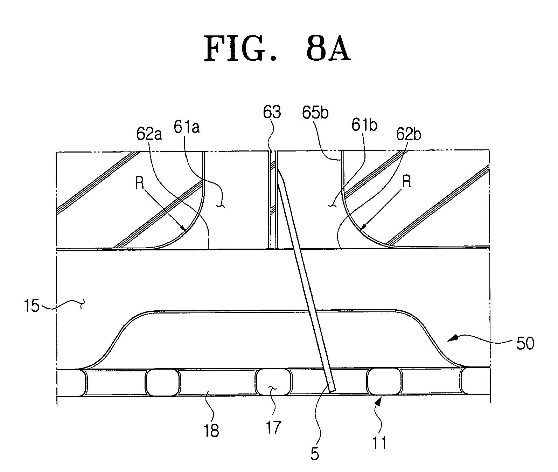

Furthermore, the suction pathway is divided into two suction pathways 61a and 61b by a partition wall 63 (see Fig. 6) formed along the length of the suction pathway 61 a and 61 b inside the suction pathway 61 a and 61 b. As a result, the width W1 of the suction pathway 61 a and 61 b is approximately half compared with the width of the conventional suction pathway so that, when rigid, long, and thin foreign bodies 5 such as toothpicks, cotton swabs, and so on are sucked in the suction port 62a and 62b, the suction pathway 61 a and 61b causes the foreign bodies 5 to enter roughly parallel to the suction pathway 61 a and 61b (see Fig. 8a).

A catching part 50 is projected in the dust guiding groove 15 (see Fig. 5) to face the suction port 62a and 62b a predetermined distance D apart as shown in Fig. 6 so that the space around the suction port 62a and 62b through which dust and contaminants are sucked is reduced. In other words, the width W3 of the catching part 50 is wider than the width W2 of the suction port 62a and 62b (W2<W3) so that the area of a front surface 51 of the catching part 50 facing the suction port 62a and 62b is larger than the area of the suction port 62a and 62b. A bottom end 55 of the catching part 50 is formed at a lower level as much as H than a bottom end of the suction port 62a and 62b as shown in Fig. 7. In this embodiment, the predetermined distance D between the suction port 62a and 62b and the front surface 51 of the catching part 50 is approximately 12.5mm to 14.5mm. However, the distance D may be determined to correspond to the length of foreign bodies 5 (see Fig. 8a) entering the suction port 62a and 62b. Alternatively, the distance D may be determined to correspond to the quantity of the contaminants and air sucked in the suction port 62a and 62b, and the capacity of the suction motor of the vacuum cleaner.

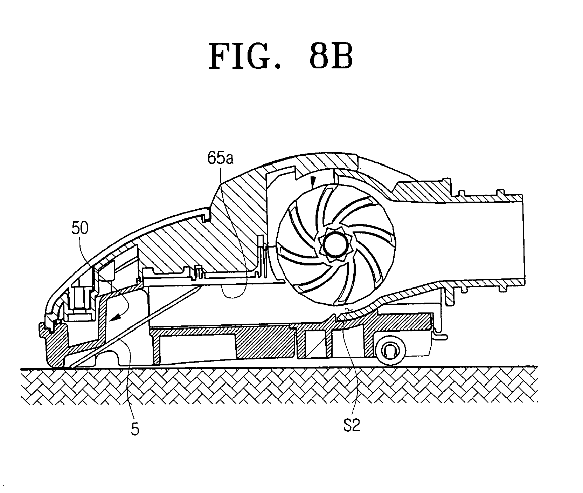

In the suction brush according to an embodiment of the present invention, the width W1 of the suction pathway 61 a and 61b becomes narrower than the width of the conventional suction pathway due to the partition wall 63 so that a rigid, thin, and long foreign body 5 entering the suction pathway 61 a and 61 b becomes roughly parallel to the suction pathway 61 a and 61 b as shown in Fig. 8a. Also, a rear end of the foreign body 5 is caught in the catching part 50 so that the foreign body 5 is inclined with respect to the horizontal as shown in Fig. 8b. Therefore, a front end of the foreign body 5 is caught in any of an upper surface 65a (see Fig. 7) of the suction pathway 61 a and 61 b, a side 65b of the suction pathway 61 a and 61 b, and the partition wall 63 so that the foreign body 5 cannot entirely enter the suction pathway 61a and 61 b.

As a result, the catching part 50 prevents the foreign body 5 from passing through the suction port 62a and 62b, entering the suction pathway 61 a and 61 b, and being inserted in a space S2 between the turbine fan 30 and the body 11 or between the turbine fan 30 and the cover 13. Also, the catching part 50 can prevent the foreign body 5 from restricting rotation of the turbine fan 30 and damaging the wings 33a and 33b of the turbine fan 30.

Furthermore, the catching part 50 may be formed so that both sides 53 thereof are inclined in a direction of the suction port 62a and 62b as shown in Fig. 6, and a bottom surface 55 thereof is inclined upwardly in a direction of the suction port 62a and 62b as shown in Fig. 7.

When the both sides 53 and bottom surface 55 of the catching part 50 are inclined as above described, air sucking in along the dust guiding groove 15 and air sucking in along the bottom surface 55 of the catching part 50 through a plurality of grooves 18 between a plurality of spacers 17 is smoothly guided to the suction port 62a and 62b.

Because the suction brush according to an embodiment of the present invention prevents rigid, thin, and long foreign bodies from entirely entering the suction pathway through the suction port, the suction brush may prevent the entered foreign body from stopping the rotation of the turbine fan or from damaging the wings of the turbine fan.

Also, the area of the plurality of wings of the turbine fan is increased for receiving more power of air sucking through the suction pathway so that the rotation speed and the rotation torque of the turbine fan are increased. Therefore, the rotation speed of the cloth is increased so that the cloth smoothly rotates thereby increasing the cleaning efficiency with respect to a cleaning surface.

While the embodiments of the present invention have been described, additional variations and modifications of the embodiments may occur to those skilled in the art once they learn of the basic inventive concepts. Therefore, it is intended that the appended claims shall be construed to include both the above embodiments and all such variations and modifications that fall within the spirit and scope of the invention.

## Claims

1. Suction brush (10) for a vacuum cleaner comprising:
a suction port (62a, 62b);
a suction pathway (61a, 62b) for guiding contaminants-laden air entering the suction port (62a, 62b) to a dust collecting apparatus;
a dust guiding groove (15) for guiding contaminants-laden air to the suction port (62a; 62b) at a bottom surface of the suction brush (10); and
a catching part (50) disposed apart from the suction port (62a, 62b) in a place corresponding to the suction port (62a, 62b) inside the dust guiding groove (15) for reducing a space around the suction port (62a, 62b),
wherein the catching part prevents rigid, thin, and long foreign bodies from entering the suction pathway.

2. Suction brush of claim 1, wherein the catching part (50) is wider than a width of the suction port (62a, 62b).

3. Suction brush of claim 1 or 2, wherein a bottom end (55) of the catching part (50) is formed at a lower level than a bottom end of the suction port (62a, 62b).

4. Suction brush of any of claims 1 to 3, wherein both sides (53) of the catching part (50) are inclined in a direction of the suction port (62a, 62b).

5. Suction brush of any of claims 1 to 4, wherein a bottom surface of the catching part (50) is inclined in a direction of the suction port (62a, 62b).

6. Suction brush of any of claims 1 to 5, wherein a distance between the suction port (62a, 62b) and the front surface of the catching part (50) facing the suction port (62a, 62b) is approximately 12.5mm to 14.5mm.

7. Suction brush of any of claims 1 to 6, further comprising a partition wall (63) formed along the length of the suction pathway (61a, 61b) inside the suction pathway (61a, 61b) in order to divide the suction pathway (61a, 61b) into a plurality of pathways.

8. Suction brush of any of claims 1 to 7, having a cleaning member (49) for cleaning a cleaning surface, and a turbine fan (30) to be driven by suction force of a suction motor for rotating the cleaning member (49).

9. Suction brush of claim 8, wherein the turbine fan (30) is disposed at the suction pathway (61a, 61b).

10. Suction brush of claim 8 or 9, wherein the turbine fan (30) comprises:
a pair of supporting discs (31 a, 31 b); and
a plurality of wings (33a, 33b) disposed between the pair of supporting discs (31a, 31b), one end of each of the wings is fixed to one of the pair of supporting discs, the other end of each of the wings alternating in position to overlap each other.

11. Suction brush of any of claims 8 to 10, comprising:
a pair of cleaning member supporting plates (47) rotatably disposed on a bottom surface of the suction brush for detachably mounting a cleaning member (49) on a bottom surface of each of the supporting plates (47); and
a power transmitting unit (43, 45) disposed in the suction brush, for transmitting the rotation power of the turbine fan (30) to the pair of supporting plates (47) for rotating the pair of supporting plates.

12. Suction brush of any of claims 1 to 11, comprising a body having the suction port, the dust guiding groove, and the suction pathway; and
a cover covering an upper side of the body so as to form the suction pathway.
